# EUROPÄISCHE PATENTSCHRIFT

(11) **EP 1 318 060 B1**
(45) Veröffentlichungstag und Bekanntmachung des Hinweises auf die Patenterteilung: **27.05.2009**
(21) Anmeldenummer: 01129198.6
(22) Anmeldetag: 10.12.2001
(51) Int. Cl.: B62B 5/04

(54) **Rollcontainer**
Wheeled container
Conteneur roulant

(43) Veröffentlichungstag der Anmeldung: 11.06.2003
(73) Patentinhaber: Tony Brändle AG Wil, 9500 Wil (CH)
(72) Erfinder: Röthenmund, Fredy, 9613 Mühlrüti (CH)
(74) Vertreter: Hepp, Dieter

(56) Entgegenhaltungen:
- EP-A- 0 593 905
- GB-A- 2 349 126
- US-A- 3 968 974
- US-A- 5 433 464

## Beschreibung

Die vorliegende Erfindung betrifft eine Transportvorrichtung, insbesondere einen Rollcontainer zum Transport von Zubehör für Feuerwehreinsatzfahrzeuge, welche mindestens eine Einheit enthält, die eine Rollvorrichtung und eine Scheibenbremse umfasst.

Feuerwehreinsatzfahrzeuge müssen zur Gewährleistung eines effizienten Einsatzes diverses Zubehör mitführen, beispielsweise Sauerstoffflaschen, Schläuche, Werkzeug oder Vorrichtungen zur Kennzeichnung bzw. Absperrung eines Einsatzortes. Die Beladung des Feuerwehreinsatzfahrzeuges mit diesem Zubehör erfolgt herkömmlich mit einem vier Räder umfassenden Rollcontainer, der beispielsweise über eine Rampe in das Innere des Feuerwehreinsatzfahrzeuges bewegt werden kann. Während des Beladevorgangs kann der Rollcontainer mit einem Zubehör im Gewicht von etwa 500 kg beladen sein. Insbesondere während des Bewegungsvorgangs auf einer schiefen Ebene besteht bei einem derartigen Lastgewicht die Gefahr, dass das Bedienungspersonal die Kontrolle über den Rollcontainer verliert. Rollcontainer sind herkömmlich mit Bakkenbremsen ausgestattet, welche beispielsweise mit dem Fuss unter Auslösung der Bremswirkung eingerastet werden können. Es ist aber nicht möglich, mit Hilfe derartiger Backenbremsen einen Rollcontainer mit hohem Lastgewicht insbesondere auf einer schiefen Ebene effizient und unmittelbar zum Halt zu bringen.

Aus anderen technischen Bereichen wie beispielsweise dem Fahrzeugbau oder Maschinenbau sind effiziente Bremssysteme bekannt. Derartige Bremssysteme sind jedoch in der Regel kompliziert aufgebaut und daher kostspielig. Ein Einsatz derartiger Bremssysteme ist daher bei einem Rollcontainer inakzeptabel, da die Kosten für das Bremssystem die Kosten des Rollcontainers übersteigen würden.

Es bestand daher die Aufgabe der vorliegenden Erfindung darin, ein effizientes und kostengünstiges Bremssystem für Transportvorrichtungen wie Rollcontainer zum Beladen von Feuerwehreinsatzfahrzeugen bereitzustellen.

Diese Aufgabe wird erfindungsgemäss durch die Gegenstände der beiliegenden Ansprüche gelöst.

Die vorliegende Erfindung betrifft eine Transportvorrichtung mit mindestens einer Einheit, umfassend eine Rollvorrichtung, mindestens eine von der Rollvorrichtung getrennte Bremsscheibe und mindestens einen Bremsklotz, wobei der Bremsklotz in einer ersten Position von der Bremsscheibe getrennt ist und in einer zweiten Position mit der Bremsscheibe in Kontakt steht und dadurch eine Bremswirkung erzeugt, dadurch gekennzeichnet, dass das Verhältnis des Durchmessers der Bremsscheibe zum Durchmesser der Rollvorrichtung im Bereich von 1:1 bis 0,5:1 liegt.

Bei der in der erfindungsgemässen Einheit enthaltenen Rollvorrichtung kann es sich um jede herkömmliche Vorrichtung handeln, durch welche ein Körper rollend voranbewegt werden kann. Beispielhaft seien ein Rad, eine Walze oder eine Raupenkette genannt, wobei erfindungsgemäss die Verwendung eines Rads als Rollvorrichtung bevorzugt ist.

Es hat sich gezeigt, dass Transportvorrichtungen wie Rollcontainer, welche zum Beladen eines Feuerwehreinsatzfahrzeuges mit Zubehör verwendet werden können, effizient durch ein einfaches Scheibenbremssystem gebremst werden können, welches sich dadurch auszeichnet, dass das Verhältnis des Durchmessers der zum Bremsen erforderlichen Bremsscheibe zum Durchmesser der zu bremsenden Rollvorrichtung im Bereich von 1:1 bis 0,5:1 liegt. Mit einer Scheibenbremse, bei welcher die Bremsscheibe einen derartigen Durchmesser aufweist, kann eine Transportvorrichtung wie ein Rollcontainer selbst auf einer schiefen Ebene bei Betätigung der Scheibenbremse unmittelbar zum Halten gebracht werden. Das Bedienungspersonal kann auf diese Weise stets die Kontrolle über diese Transportvorrichtung behalten.

Die vorliegende Erfindung wird nachstehend anhand von Zeichnungen näher erläutert, durch welche jedoch der Gegenstand der vorliegenden Erfindung nicht eingeschränkt werden soll.
- Figur 1: zeigt eine Seitenansicht einer erfindungsgemässen Einheit, welche eine Rollvorrichtung, eine von der Roll-vorrichtung getrennte Bremsscheibe sowie einen die Bremswirkung hervorrufenden Bremsklotz umfasst.
- Figur 2: zeigt eine Vorderansicht einer erfindungsgemässen Einheit.
- Figur 3: zeigt eine Seitenansicht einer erfindungsgemässen Transportvorrichtung, welche neben herkömmlichen Rädern auch mindestens eine erfindungsgemässe Einheit umfasst.
- Figur 4: zeigt einen Bremszylinder gemäss einer ersten Ausgestaltungsform der vorliegenden Erfindung.
- Figur 5: zeigt einen Bremszylinder gemäss einer zweiten Ausgestaltungsform der vorliegenden Erfindung.

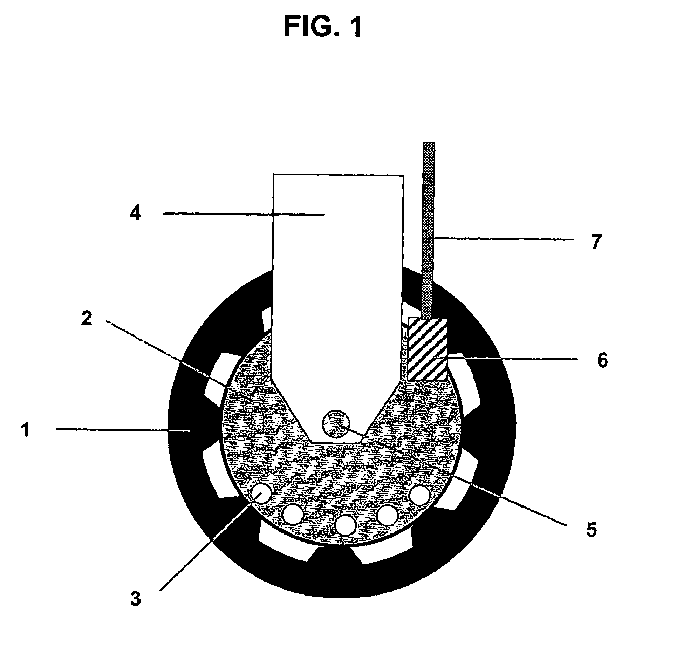

Wie in Figur 1 gezeigt umfasst eine erfindungsgemässe Einheit eine Rollvorrichtung 1, vorzugsweise ein Rad. Das Rad kann aus jedem herkömmlichen für die Reifenherstellung verwendeten Material bestehen. Beispielsweise seien ein Vollgummirad, ein Rad aus Kunststoff oder ein Metallrad, das einen Reifen aus Gummi oder Kunststoff aufweist, der das Rad vollständig umhüllt, genannt. Ein derartiges Rad aus Metall kann innen massiv sein oder wie in Figur 1 gezeigt Speichen umfassen, mit welchen ein den Reifen tragendes kreisförmiges Teil mit der Radachse verbunden ist. Von der Rollvorrichtung 1 getrennt angeordnet ist eine Bremsscheibe 2. Diese Bremsscheibe 2 kann aus jedem herkömmlich für Bremsscheiben verwendeten Material gefertigt sein. Erfindungsgemäss bevorzugt ist die Bremsscheibe 2 aus einem Metall gefertigt. Zur verbesserten Ableitung von während des Bremsvorgangs erzeugter Wärmeenergie kann die Bremsscheibe 2 Öffnungen 3 aufweisen. Diese Öffnungen 3 können jede Form besitzen. Erfindungsgemäss bevorzugt sind die Öffnungen 3 kreisförmig. Sowohl die Rollvorrichtung 1 als auch die Bremsscheibe 2 sind auf einer Achse 5 drehbar angeordnet. Des Weiteren ist an der Achse 5 auch eine Befestigungsvorrichtung 4 angeordnet, über welche die erfindungsgemässe Einheit mit einer Transportvorrichtung wie einem Rollcontainer zum Beladen von Feuerwehreinsatzfahrzeugen verbunden werden kann. Die Achse 5 und die Befestigungsvorrichtung 4 können auf jede beliebige herkömmlich bekannte Art ausgestaltet sein. Weiterhin umfasst die erfindungsgemässe Einheit einen Bremsklotz 6, über welchen die Bremswirkung erzeugt wird. Der Bremsklotz 6 ist so zur Bremsscheibe 2 angeordnet, dass er in einer ersten Position von der Bremsscheibe 2 getrennt ist und in einer zweiten Position mit der Bremsscheibe 2 in Kontakt steht, wodurch die Bremswirkung hervorgerufen wird. Der Bremsklotz 6 steht über ein längliches Bauteil 7 in Kontakt mit einer in Figur 1 nicht gezeigten Bedienungsvorrichtung.

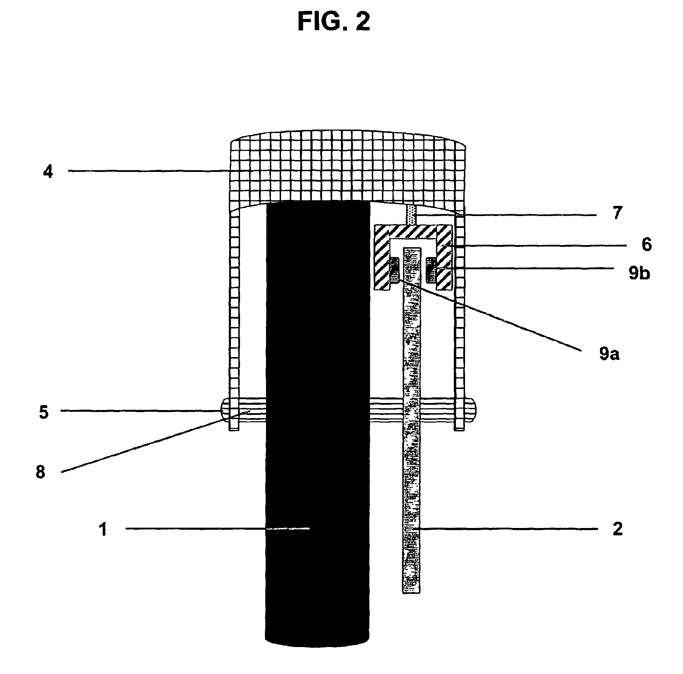

In Figur 2 ist eine bevorzugte Ausführungsform des Bremsklotzes 6 zu sehen. Hiernach umfasst der Bremsklotz 6 zwei Elemente 9a, 9b, zwischen welchen die Bremsscheibe 2 angeordnet ist. Bei Betätigen einer in Figur 2 nicht gezeigten Bedienungsvorrichtung, welche mit dem Bremsklotz 6 über das längliche Bauteil 7 in Verbindung steht, wird der Bremsklotz 6 aus der in Figur 2 gezeigten ersten Position, in welcher die Elemente 9a, 9b von der Bremsscheibe 2 getrennt sind, in eine zweite Position überführt. In dieser zweiten Position stehen die Elemente 9a, 9b in Kontakt mit der Bremsscheibe 2. Dadurch wird die Drehbewegung der Bremsscheibe 2 gestoppt, wodurch ebenfalls die Bewegung der Achse 5 und folglich der Rollvorrichtung 1 unterbunden wird.

Die erfindungsgemässe Einheit besteht aus herkömmlichen und käuflich erhältlichen Bestandteilen, aus welchen die erfindungsgemässe Einheit anhand der hier gegebenen Darstellung problemlos zusammengebaut werden kann. Bei dem länglichen Bauteil 7 kann es sich beispielsweise um einen herkömmlichen Seilzug handeln, der durch Betätigen einer Bedienungsvorrichtung gespannt werden kann und somit zu einer Positionsveränderung des Bremsklotzes 6 führt. Das längliche Bauteil 7 kann aber auch gemäss herkömmlich bekannten Scheibenbremsen ausgestaltet sein. Beispielsweise kann es sich hierbei um ein Hohlrohr handeln, über welches eine hydraulische Verbindung zwischen der Bedienungsvorrichtung und dem Bremsklotz 6 hergestellt wird. Erfindungsgemäss handelt es sich bei dem länglichen Bauteil 7 um einen Seilzug.

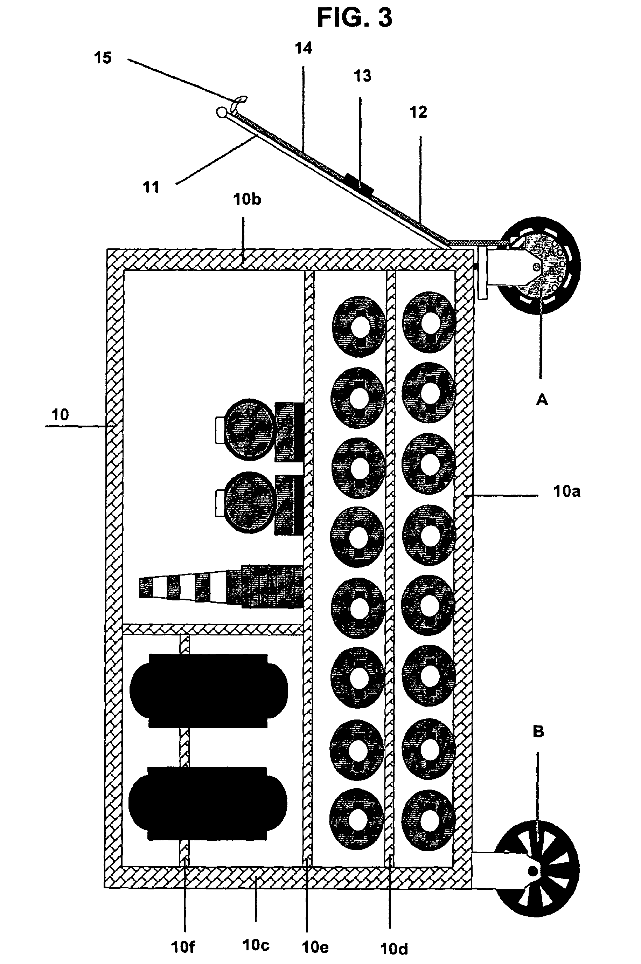

In Figur 3 ist eine erfindungsgemässe Transportvorrichtung gezeigt, welche neben herkömmlichen Rollvorrichtungen B erfindungsgemässe Einheiten A umfasst. Sowohl die herkömmlichen Rollvorrichtungen B als auch die erfindungsgemässen Einheiten A sind an einer Fläche 10a angeordnet, auf welche Zubehör für ein Feuerwehreinsatzfahrzeug geladen werden kann. Derartige Transportvorrichtungen sind aus dem Stand der Technik bekannt und müssen daher hier nicht näher beschrieben werden. Vorzugsweise umfassen derartige Transportvorrichtungen vier Rollvorrichtungen. Die erfindungsgemässen Transportvorrichtungen sind dadurch gekennzeichnet, dass sie neben einer entsprechenden Anzahl herkömmlicher Rollvorrichtungen zwei erfindungsgemässe Einheiten gemäss Anspruch 1 umfassen. Erfindungsgemäss besonders bevorzugt ist ein Rollcontainer als Transportvorrichtung, welcher an seiner vorderen Achse zwei herkömmliche Rollvorrichtungen B und an seiner hinteren Achse zwei erfindungsgemässe Einheiten A umfasst. Eine derartige Ausführungsform ist gegenüber einer nur eine erfindungsgemässe Einheit A an einer Achse aufweisenden Transportvorrichtung bevorzugt, da es im letzteren Fall während des Bremsvorgangs zu einem einseitigen Ausbrechen der Transportvorrichtung kommen kann, was zu einem Verlust der Kontrolle über die Transportvorrichtung führen kann.

In Figur 3 ist ein erfindungsgemäss bevorzugter Rollcontainer mit zwei herkömmlichen Rädern B an der vorderen Achse und zwei erfindungsgemässen Einheiten A an der hinteren Achse gezeigt. Neben der Grundfläche 10a umfasst dieser Rollcontainer weitere Ablageflächen 10d, 10e, 10f sowie vertikale Streben 10b, 10c, an welchen die Flächen befestigt sind, sowie eine Deckenfläche 10. Des Weiteren umfasst der Rollcontainer eine Deichsel 11 zum Bewegen des Rollcontainers. Anstelle der Deichsel 11 kann jedoch auch jede andere herkömmliche zu diesem Zweck verwendete Vorrichtung eingesetzt werden. An der Deichsel 11 ist eine Bedienungsvorrichtung 15 zum Betätigen der Bremsen angeordnet.

Um während des Bremsvorgangs ein einseitiges Ausbrechen des Rollcontainers zu verhindern, ist es erwünscht, die Bremswirkung an beiden erfindungsgemässen Einheiten A gleichzeitig hervorzurufen. Um dies zu erreichen, sind die an den jeweiligen Einheiten A angeordneten Bremsklötze 6 jeweils mit einem Bremszug 12a, 12b, einem Bremszylinder 13 und einem Seilzug 14 mit der Bedienungsvorrichtung 15 verbunden.

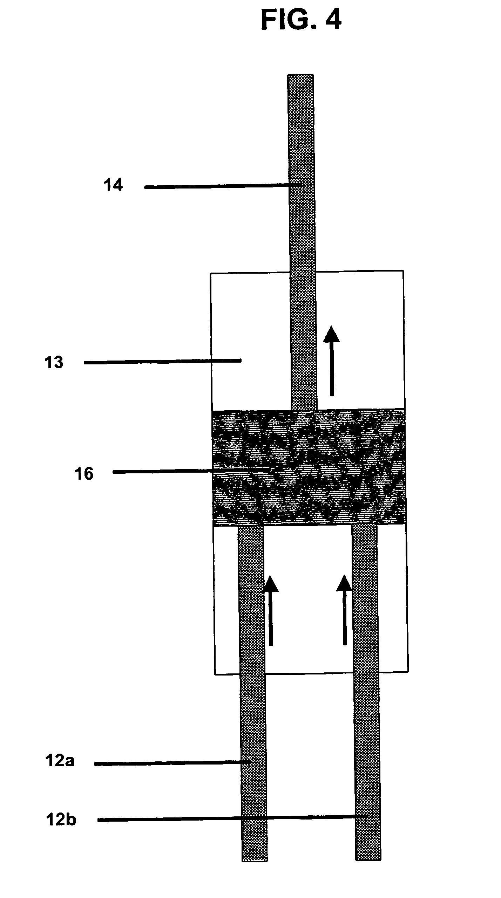

In Figur 4 ist eine erste Ausführungsform des Bremszylinders 13 gezeigt. In dieser Ausführungsform ist der Seilzug 14 innerhalb des Bremszylinders 13 über einen festen Kontaktblock 16, der innerhalb des Bremszylinders 13 beweglich angeordnet ist, mit den Bremszügen 12a, 12b verbunden. Bei Betätigung der Bedienungsvorrichtung 15 wird der Seilzug 14 gespannt und dadurch der Kontaktblock 16 innerhalb des Bremszylinders 13 nach oben bewegt. Dies führt zu einem Spannen der Bremszüge 12a, 12b, wodurch die Bremsklötze 6 von einer ersten Position in eine zweite Position überführt werden, in welcher sie an den Scheibenbremsen 2 eine Bremswirkung hervorrufen. Ein derartiger Bremszylinder ist aus dem Stand der Technik bekannt.

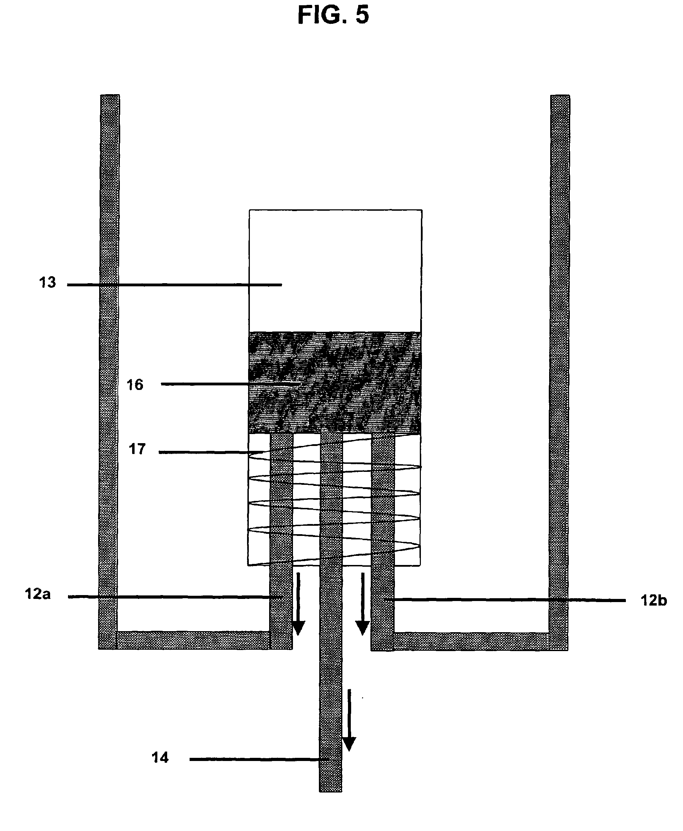

In Figur 5 ist eine zweite Ausgestaltung des Bremszylinders 13 gezeigt, nämlich in Form einer sogenannten Totmannbremse. Die gesetzlichen Vorschriften verschiedener Länder erfordern, dass Transportvorrichtungen wie Rollcontainer zum Beladen von Feuerwehreinsatzfahrzeugen mit Zubehör mit Totmannbremsen ausgestattet sind. Bei Totmannbremsen erfolgt die Bremswirkung bei Loslassen einer entsprechenden Bedienungsvorrichtung, während zum Bewegen der Transportvorrichtung die entsprechende Bedienungsvorrichtung betätigt werden muss. Ein derartiges System ist in Figur 5 gezeigt. Innerhalb des Bremszylinders 13 ist ein fester Block 16 beweglich angeordnet. Der feste Block 16 wird innerhalb des Bremszylinders 13 mittels einer Feder 17, beispielsweise einer Spiralfeder, unter Spannung gehalten und zu einem Ende des Bremszylinders 13 gedrückt. Dies führt dazu, dass die mit dem Block 16 verbundenen Bremszüge 12a, 12b gespannt sind und dadurch an den Einheiten A eine Bremswirkung hervorgerufen wird. Die Spannung der Bremszüge 12a, 12b kann durch Ziehen des Seilzugs 14 mittels der Bedienungsvorrichtung 15 gegen die Kraft der Feder 17 verringert oder aufgehoben werden. Bei Loslassen der Bedienungsvorrichtung 15 wird über den Seilzug 14 keine Kraft mehr ausgeübt. Folglich wird der feste Block 16 durch die Feder 17 wieder unter Spannen der Bremszüge 12a, 12b zu einem Ende des Bremszylinders 13 gedrückt.

Durch die in den Figuren 4 und 5 gezeigten Bremsvorrichtungen kann an mehreren Einheiten A gleichzeitig eine Bremswirkung hervorgerufen werden. Dadurch wird ein einseitiges Ausbrechen der Transportvorrichtung verhindert.

Erfindungsgemäss bevorzugt sind sowohl die herkömmlichen Rollvorrichtungen B als auch die erfindungsgemässen Einheiten A derart an der Fläche 10a angeordnet, dass sie frei drehbar sind, d.h. um 360° bewegt werden können. Es ist aber auch ausreichend, wenn nur die an der hinteren Achse angeordneten erfindungsgemässen Einheiten A frei drehbar um 360° angeordnet sind. Die mit zwei der erfindungsgemässen Einheiten A ausgestatteten Transportvorrichtungen wie Rollcontainer sind insbesondere zum Beladen von Feuerwehreinsatzfahrzeugen mit notwendigem Zubehör geeignet. Insbesondere sind diese Transportvorrichtungen selbst bei voller Beladung auf einer schiefen Ebene so kontrollierbar, dass sie durch Bremsen unmittelbar zum Halten gebracht werden können. Dies wird durch das erfindungsgemäss gewählte Verhältnis des Durchmessers der Bremsscheibe zum Durchmesser der Rollvorrichtung erreicht.

Obwohl die vorliegende Erfindung hauptsächlich Transportvorrichtungen für Feuerwehreinsatzfahrzeuge betrifft, können die erfindungsgemässen Transportvorrichtungen selbstverständlich auch für andere Fahrzeuge, beispielsweise im Sanitäts- oder Baubereich, eingesetzt werden, wo ein effizientes Bremssystem insbesondere bei Bewegen der Vorrichtung auf einer schiefen Ebene wünschenswert ist.

## Patentansprüche

1. Transportvorrichtung (10), umfassend mindestens eine Fläche (10a), mindestens eine erste Rollvorrichtung (B) sowie mindestens eine Einheit (A), welche eine zweite Rollvorrichtung (1), mindestens eine von der zweiten Rollvorrichtung getrennte Bremsscheibe (2) und mindestens einen Bremsklotz (6) enthält, wobei der Bremsklotz (6) in einer ersten Position von der Bremsscheibe (2) getrennt ist und in einer zweiten Position mit der Bremsscheibe in Kontakt steht und dadurch eine Bremswirkung erzeugt, wobei die Transportvorrichtung (10) zwei Rollvorrichtungen (B) sowie zwei Einheiten (A) umfasst, **dadurch gekennzeichnet, dass**
das Verhältnis des Durchmessers der Bremsscheibe (2) zum Durchmesser der Rollvorrichtung (1) im Bereich von 1:1 bis 0,5:1 liegt, und die gleichzeitige Überführung der Bremsklötze (6) von einer ersten Position in eine zweite Position unter Erzeugung einer Bremswirkung an allen Einheiten A durch Loslassen eines Seilzugs (14) erfolgt, der sich über ein Kontaktelement (16) mit mindestens zwei Bremszügen (12a, 12b) derart in Kontakt befindet, dass bei Loslassen des Seilzugs (14) die Bremszüge (12a, 12b) gleichzeitig gezogen werden.

2. Transportvorrichtung (10) nach Anspruch 1, **dadurch gekennzeichnet, dass** es sich bei den Rollvorrichtungen (1 und B) jeweils um ein Rad handelt.

3. Transportvorrichtung (10) nach einem der Ansprüche 1 bis 2, **dadurch gekennzeichnet, dass** der Bremsklotz (6) zwei Elemente (9a, 9b) umfasst, zwischen welchen die Bremsscheibe (2) angeordnet ist, und welche in einer zweiten Position mit der Bremsscheibe (2) in Kontakt stehen und dadurch eine Bremswirkung erzeugen.

4. Transportvorrichtung (10) nach einem der Ansprüche 1 bis 3, **dadurch gekennzeichnet, dass** bei Anwesenheit von mindestens zwei Einheiten (A) die an diesen Einheiten (A) befindlichen Bremsklötze (6) gleichzeitig von einer ersten Position in eine zweite Position überführt werden können und somit an allen Einheiten (A) gleichzeitig eine Bremswirkung erzeugt wird.

5. Transportvorrichtung (10) nach einem der Ansprüche 1 bis 4, weiterhin umfassend vertikale Stangen (10b, 10c), welche in gewissen Abständen zur Fläche (10a) weitere Zusatzflächen (10d, 10e, 10f) tragen können.

6. Transportvorrichtung (10) nach einem der Ansprüche 1 bis 5, weiterhin umfassend eine Vorrichtung (15), mit welcher der Seilzug (14) gezogen werden kann.

7. Transportvorrichtung (10) nach einem der Ansprüche 1 bis 6, **dadurch gekennzeichnet, dass** die Rollvorrichtungen (B) sowie die Einheiten (A) so an der Fläche (10a) angeordnet sind, dass sie zumindest teilweise um 360° drehbar sind.

8. Verwendung einer Transportvorrichtung (10) gemäss einem der Ansprüche 1 bis 7 zum Transport von Zubehör für Feuerwehreinsatzfahrzeuge, Sanitätstahrzeuge oder Baufahrzeuge.

## Claims

1. Transport device (10), comprising at least one surface (10a), at least one first rolling device (B) and also at least one unit (A) which comprises a second rolling device (1), at least one brake disc (2) separated from the second rolling device, and at least one brake shoe (6), wherein the brake shoe (6) is separated from the brake disc (2) in a first position and is in contact with the brake disc in a second position and thereby produces a braking action, wherein the transport device (10) comprises two rolling devices (B) and also two units (A), **characterized in that** the ratio of the diameter of the brake disc (2) to the diameter of the rolling device (1) is in the range from 1:1 to 0.5:1, and the brake shoes (6) are simultaneously moved from a first position to a second position to produce a braking action at all units (A) by releasing a cable pull (14) which is in contact with at least two brake cables (12a, 12b) via a contact element (16) in such a way that the brake cables (12a, 12b) are simultaneously pulled on releasing the cable pull (14).

2. Transport device (10) according to Claim 1,
**characterized in that** the rolling devices (1 and B) each take the form of a wheel.

3. Transport device (10) according to either of Claims 1 and 2, **characterized in that** the brake shoe (6) comprises two elements (9a, 9b) between which the brake disc (2) is arranged and which are in contact with the brake disc (2) in a second position and thereby produce a braking action.

4. Transport device (10) according to one of Claims 1 to 3, **characterized in that,** with the presence of at least two units (A), the brake shoes (6) located on these units (A) can be simultaneously moved from a first position to a second position and a braking action is thus produced simultaneously at all units (A).

5. Transport device (10) according to one of Claims 1 to 4, further comprising vertical bars (10b, 10c) which can carry further additional surfaces (10d, 10e, 10f) at certain intervals from the surface (10a).

6. Transport device (10) according to one of Claims 1 to 5, further comprising a device (15) by means of which the cable pull (14) can be pulled.

7. Transport device (10) according to one of Claims 1 to 6, **characterized in that** the rolling devices (B) and also the units (A) are arranged on the surface (10a) such that they can be rotated, at least in part, through 360°.

8. Use of a transport device (10) according to one of Claims 1 to 7 for transporting accessories for fire engines, ambulances or construction vehicles.

## Revendications

1. Dispositif de transport (10), comprenant au moins une surface (10a), au moins un premier dispositif de roulement (B) ainsi qu'au moins une unité (A), qui contient un deuxième dispositif de roulement (1), au moins un disque de frein (2) séparé du deuxième dispositif de roulement, et au moins un patin de frein (6), le patin de frein (6) étant séparé du disque de frein dans une première position et étant en contact avec le disque de frein dans une deuxième position, et produisant de ce fait un effet de freinage, le dispositif de transport (10) comprenant deux dispositifs de roulement (B) ainsi que deux unités (A),
**caractérisé en ce que**
le rapport du diamètre du disque de frein (2) au diamètre du dispositif de roulement (1) est de l'ordre de 1:1 à 0,5:1, et le transfert simultané des patins de frein (6) d'une première position dans une deuxième position en produisant un effet de freinage s'effectue sur toutes les unités A par détente d'un câble de traction (14), qui se trouve en contact avec au moins deux câbles de frein (12a, 12b) par le biais d'un élément de contact (16) de telle sorte que lors de la détente du câble de traction (14), les câbles de frein (12a, 12b) soient tirés simultanément.

2. Dispositif de transport (10) selon la revendication 1, **caractérisé en ce que** les dispositifs de roulement (1 et B) sont chacun constitués par une roue.

3. Dispositif de transport (10) selon l'une quelconque des revendications 1 à 2, **caractérisé en ce que** le patin de frein (6) comprend deux éléments (9a, 9b) entre lesquels le disque de frein (2) est disposé, et qui sont en contact dans une deuxième position avec le disque de frein (2) et produisent ainsi un effet de freinage.

4. Dispositif de transport (10) selon l'une quelconque des revendications 1 à 3, **caractérisé en ce qu'**en présence d'au moins deux unités (A), les patins de frein (6) disposés sur ces unités (A) peuvent être transférés simultanément d'une première position dans une deuxième position et ainsi un effet de freinage peut être produit simultanément sur toutes les unités (A).

5. Dispositif de transport (10) selon l'une quelconque des revendications 1 à 4, comprenant en outre des tiges verticales (10b, 10c) qui peuvent porter, à certaines distances de la surface (10a), d'autres surfaces supplémentaires (10d, 10e, 10f).

6. Dispositif de transport (10) selon l'une quelconque des revendications 1 à 5, comprenant en outre un dispositif (15) avec lequel le câble de traction (14) peut être tiré.

7. Dispositif de transport (10) selon l'une quelconque des revendications 1 à 6, **caractérisé en ce que** les dispositifs de roulement (B) ainsi que les unités (A) sont disposés sur la surface (10a) de telle sorte qu'ils puissent tourner au moins en partie de 360°.

8. Utilisation d'un dispositif de transport (10) selon l'une quelconque des revendications 1 à 7, pour le transport d'accessoires pour des véhicules de lutte contre le feu, des véhicules sanitaires ou des engins de construction.
